# EUROPÄISCHE PATENTSCHRIFT

(11) **EP 4 089 264 B1**
(45) Veröffentlichungstag und Bekanntmachung des Hinweises auf die Patenterteilung: **12.08.2026**
(21) Anmeldenummer: 22164552.6
(22) Anmeldetag: 25.03.2022
(51) Int. Cl.: F01D 5/14

(54) **GASTURBINEN-SCHAUFELANORDNUNG**
GAS TURBINE BLADE ARRANGEMENT
AGENCEMENT D'AUBES POUR TURBINES À GAZ

(30) Priorität: 19.04.2021 DE 102021109844
(43) Veröffentlichungstag der Anmeldung: 16.11.2022
(73) Patentinhaber: MTU Aero Engines AG, 80995 München (DE)
(72) Erfinder: Schütte, Wilfried, 80995 München (DE); Stettner, Axel, 80995 München (DE); Junge, Michael, 80995 München (DE)

(56) Entgegenhaltungen:
- EP-A1- 3 477 049
- FR-A1- 2 928 172
- US-A- 3 600 781
- US-A1- 2003 170 124

## Beschreibung

Die vorliegende Erfindung betrifft eine Schaufelanordnung für eine Gasturbine, insbesondere eine Flugtriebwerk-Gasturbine, wobei die Schaufelanordnung eine Mantelfläche zur radialen Begrenzung eines Ringraums und wenigstens ein damit verbundenes oder integral ausgebildetes Schaufelblatt aufweist, sowie eine Verdichter- oder Turbinenstufe und eine Gasturbine, insbesondere Flugtriebwerk-Gasturbine, mit wenigstens einer solchen Schaufelanordnung.

Durch Steifigkeitssprünge zwischen dünnen Schaufelblättern und massiven Scheiben(körpern) kann es zu unerwünschten Spannungsnestern bzw. -spitzen kommen. Nach betriebsinterner Praxis werden diese durch Fillets bzw. Übergangs- bzw. Verrundungsradien reduziert. Diese können jedoch insbesondere die Aerodynamik beeinträchtigen.

US 3 600 781 A1 und EP 3 477 049 A1 zeigen Beispiele von Statorschaufeln mit radial inneren Mantelflächen mit konvexem Verlauf.

Eine Aufgabe einer Ausführung der vorliegenden Erfindung ist es, eine Gasturbine zu verbessern, vorzugsweise einen oder mehrere der vorgenannten Nachteile zu reduzieren.

Diese Aufgabe wird durch einen integral beschaufelten Rotor ("BLade Integrated diSK", BLISK) mit den Merkmalen des Anspruchs 1 gelöst. Anspruch 8 stellt eine Gasturbine mit wenigstens einer hier beschriebenen Schaufelanordnung unter Schutz. Vorteilhafte Ausführungsformen der Erfindung sind Gegenstand der Unteransprüche.

Nach einer Ausführung der vorliegenden Erfindung weist ein integral beschaufelter Rotor für eine Gasturbine, insbesondere Flugtriebwerk-Gasturbine, eine Schaufelanordnung und (jeweils) eine Mantelfläche auf, die einen Ringraum, insbesondere einen von einem Arbeitsmedium der Gasturbine durchströmten bzw. hierzu vorgesehenen, insbesondere eingerichteten, bzw. verwendeten, Ringraum radial begrenzt bzw. hierzu vorgesehen, insbesondere eingerichtet, ist bzw. verwendet wird.

"Axial" bezeichnet in einer Ausführung in fachüblicher Weise eine Richtung parallel zu einer Dreh- bzw. (Haupt)Maschinenachse der Gasturbine, eine Umfangsrichtung entsprechend insbesondere eine Rotationsrichtung um diese Achse und "radial" entsprechend insbesondere eine zur Axial- und Umfangsrichtung senkrechte Richtung, insbesondere von der Achse weg(weisend) und/oder längs einer Koordinatenachse, welche die Dreh- bzw. (Haupt)Maschinenachse der Gasturbine schneidet.

In einer Ausführung ist die Mantelfläche eine radial innere Mantelfläche bzw. begrenzt den Ringraum (nach) radial innen, in einer anderen Ausführung eine radial äußere Mantelfläche bzw. begrenzt den Ringraum (nach) radial außen.

Obwohl die Erfindung nicht hierauf beschränkt ist, kann sie, insbesondere aufgrund der thermischen, aerodynamischen und/oder mechanischen Randbedingungen, mit besonderem Vorteil für radial innere Mantelflächen eingesetzt werden.

Nach einer Ausführung der vorliegenden Erfindung weist die Schaufelanordnung ein oder mehrere Schaufelblätter, insbesondere Laufschaufelblätter oder Leitschaufelblätter, auf, die mit der Mantelfläche, in einer Ausführung stoffschlüssig und/oder unlösbar, verbunden oder integral ausgebildet sind.

Die Erfindung betrifft und hat besonbdere Vorteile für integral beschaufelte Rotoren ("BLade Integrated diSK", BLISK) bzw. Mantelflächen mit mehreren integral damit ausgebildeten oder stoffschlüssig bzw. unlösbar verbundenen Laufschaufelblättern eingesetzt werden.

Nach einer Ausführung der vorliegenden Erfindung weist die, in einer Ausführung konvex bzw. zum Schaufelblatt hin, gekrümmte Kontur der Mantelfläche in wenigstens einem Meridianschnitt, in einer Ausführung die gekrümmte Kontur der Mantelfläche in wenigstens einem (ersten) Meridianschnitt auf einer Seite des Schaufelblattes, die vorliegend ohne Beschränkung der Allgemeinheit als erste Kontur bezeichnet wird, und die gekrümmte Kontur der Mantelfläche in wenigstens einem (zweiten) Meridianschnitt auf einer in Umfangsrichtung gegenüberliegenden Seite des Schaufelblattes, die vorliegend ohne Beschränkung der Allgemeinheit als zweite Kontur bezeichnet wird, d.h. die gekrümmte (erste und zweite) Kontur der Mantelfläche in wenigstens zwei Meridianschnitten auf einander (in Umfangsrichtung) gegenüberliegenden Seiten des Schaufelblattes (jeweils)
- einen schaufelblattvorderkantennäheren, in einer Ausführung schaufelblattvorderkantennächsten, Schnittpunkt und einen schaufelblatthinterkantennäheren, in einer Ausführung schaufelblatthinterkantennächsten, Schnittpunkt mit einer Ausgleichsgerade minimaler quadratischer Abstände zur (entsprechenden bzw. jeweiligen, d.h. ersten bzw. zweiten) Kontur,
- wenigstens einen (axial) zwischen diesen beiden Schnittpunkten liegenden Zwischenpunkt, der (radial) maximal von der (entsprechenden bzw. jeweiligen) Ausgleichsgerade entfernt und (radial) auf der dem Schaufelblatt zugewandten Seite der Ausgleichsgerade bzw. schaufelblattseitig, bei einer radial inneren Mantelfläche also radial außen bzw. oberhalb der Ausgleichsgerade, angeordnet ist, sowie
- einen, in einer Ausführung zusammenhängenden bzw. stetigen bzw. kontinuierlichen, Konturabschnitt, der vorliegend ohne Beschränkung der Allgemeinheit als erster Konturabschnitt bezeichnet wird und zwischen einem vorderkantenseitigen Anfang der (entsprechenden bzw. jeweiligen, d.h. ersten bzw. zweiten) Kontur und dem schaufelblattvorderkantennäheren bzw. schaufelblattvorderkantennächsten Schnittpunkt angeordnet ist, und
- einen, in einer Ausführung zusammenhängenden bzw. stetigen bzw. kontinuierlichen, Konturabschnitt auf, der vorliegend ohne Beschränkung der Allgemeinheit als zweiter Konturabschnitt bezeichnet wird und zwischen dem schaufelblatthinterkantennäheren bzw. schaufelblatthinterkantennächsten Schnittpunkt und einem hintererkantenseitigen Ende der (entsprechenden bzw. jeweiligen, d.h. ersten bzw. zweiten) Kontur angeordnet ist.

Der (erste und zweite) Meridianschnitt ist in einer Ausführung (jeweils) in fachüblicher Weise ein (ebener) Schnitt, der die Axialrichtung bzw. Dreh- bzw. (Haupt)Maschinenachse der Gasturbine enthält und vorzugsweise nicht das (entsprechende) Schaufelblatt schneidet. In einer Ausführung ist der (erste und zweite) Meridianschnitt bzw. die (erste und zweite) Kontur, auf den bzw. die hier Bezug genommen wird, von dem Schaufelblatt, auf das hier Bezug genommen wird, in Umfangsrichtung (jeweils) um höchstens 25%, insbesondere höchstens 10%, und/oder wenigstens 1% eines Abstands des Schaufelblatts zu einem ihm in Umfangsrichtung benachbarten Schaufelblatt entfernt. Für solche schaufelblattnahen Mantelflächenbereiche bzw. Konturen ist die vorliegende Erfindung, insbesondere aufgrund der dortigen mechanischen Belastungen, insbesondere Spannungen, besonders geeignet.

Die Ausgleichsgerade ist in einer Ausführung in fachüblicher Weise die Gerade, für die die Quadrate der (radialen) Abstände zwischen der Gerade und (den Punkten) der Kontur minimal ist, insbesondere also die lineare Regressionsgerade (zu) der Kontur. Wird die Kontur durch die Funktion f(x) längs der Axialkoordinate x beschrieben, ergibt sich die Ausgleichsgerade mithin als diejenige Gerade a·x+b, für die ∫ₓ₁^{x2}[f(x)-(a·x+b)]²dx zwischen dem Konturanfang x1 und dem Konturende x2 minimal ist. Durch die Bezugnahme auf die Ausgleichsgerade kann in einer Ausführung vorteilhaft die Flächen- bzw. Massen- und/oder Spannungsverteilung berücksichtigt werden.

In einer Ausführung schneidet die Ausgleichsgerade die Kontur nur ein- oder zweimal bzw. in dem schaufelblattvorderkantennäheren bzw. schaufelblattvorderkantennächsten Schnittpunkt oder einem diesen beinhaltenden geraden Abschnitt der Kontur und/oder dem schaufelblatthinterkantennäheren bzw. schaufelblatthinterkantennächsten Schnittpunkt oder einem diesen beinhaltenden geraden Abschnitt der Kontur. Hierdurch kann in einer Ausführung die Aerodynamik und/oder Fertigung verbessert werden.

Nach einer Ausführung der vorliegenden Erfindung sind der erste Konturabschnitt und der Zwischenpunkt auf einander (radial) gegenüberliegenden Seiten der Ausgleichsgerade angeordnet, d.h. bei einer radial inneren Mantelfläche also der erste Konturabschnitt radial innen bzw. unterhalb der Ausgleichsgerade, und ein maximaler (radialer) Abstand zwischen der Ausgleichsgerade und dem ersten Konturabschnitt beträgt wenigstens 45%, insbesondere wenigstens 50%, und höchstens 120% einer maximalen Blattdicke in wenigstens einem Profilschnitt des Schaufelblatts und/oder wenigstens 80%, insbesondere wenigstens 90%, und höchstens 250% eines (radialen) Abstands zwischen der Ausgleichsgerade und dem Zwischenpunkt.

Zusätzlich oder alternativ sind nach einer Ausführung der vorliegenden Erfindung der zweite Konturabschnitt und der Zwischenpunkt auf einander (radial) gegenüberliegenden Seiten der Ausgleichsgerade angeordnet, d.h. bei einer radial inneren Mantelfläche also der zweite Konturabschnitt radial innen bzw. unterhalb der Ausgleichsgerade, und ein maximaler (radialer) Abstand zwischen der Ausgleichsgerade und dem zweiten Konturabschnitt beträgt wenigstens 45%, insbesondere wenigstens 50%, und höchstens 150%einer, in einer Ausführung der vorstehend genannten, maximalen Blattdicke in wenigstens einem Profilschnitt des Schaufelblatts und/oder wenigstens 160%, insbesondere 175%, und höchstens 270%eines bzw. des Abstands zwischen der Ausgleichsgerade und dem Zwischenpunkt.

Zusätzlich oder alternativ beträgt nach einer Ausführung der vorliegenden Erfindung ein bzw. der (radiale) Abstand zwischen der Ausgleichsgerade und dem Zwischenpunkt wenigstens 20%, insbesondere 25%, und höchstens 100% einer, in einer Ausführung der vorstehend genannten, maximalen Blattdicke in wenigstens einem Profilschnitt des Schaufelblatts, wobei zusätzlich der erste Konturabschnitt und der Zwischenpunkt auf einander gegenüberliegenden Seiten der Ausgleichsgerade angeordnet sind und/oder der zweite Konturabschnitt und der Zwischenpunkt auf einander gegenüberliegenden Seiten der Ausgleichsgerade angeordnet sind.

In einer Ausführung ist ein bzw. der Profilschnitt, auf den bzw. dessen Blattdicke hier Bezug genommen wird, von der Mantelfläche radial um wenigstens 5%, insbesondere wenigstens 10%, und/oder höchstens 50%, insbesondere höchstens 25% einer, insbesondere maximalen, minimalen oder mittleren, (radialen) Höhe des Schaufelblatts entfernt. Durch die Bezugnahme auf einen solchen Profilschnitt bzw. dessen Blattdicke kann in einer Ausführung vorteilhaft die Spannungsverteilung in der Nähe der Mantelfläche berücksichtigt werden.

Hierdurch bzw. durch eine oder mehrere der vorgenannten drei Bedingungen betreffend den ersten Konturabschnitt, zweiten Konturabschnitt bzw. Zwischenpunkt werden in einer Ausführung ein lokal im Bereich der Vorder- bzw. Hinterkante abgesenkter Ringraum bzw. eine lokal im Bereich der Vorder- bzw. Hinterkante eingezogene Mantelfläche realisiert und/oder, insbesondere hierdurch, ein Spannungsverlauf zwischen Schaufelblatt und Mantelfläche verbessert, vorzugsweise Spannungsspitzen reduziert.

Hierdurch kann in einer Ausführung eine Zuverlässigkeit erhöht, vorzugsweise eine Rissinitation, insbesondere durch Beschädigung im Betrieb, insbesondere durch Kollisionen mit Hindernissen ("Foreign Object Damage", FOD) oder bei (De)Montage, reduziert und/oder ein Rissfortschrittsverhalten verbessert werden.

In einer Ausführung erstreckt sich der erste Konturabschnitt von dem vorderkantenseitigen Anfang der Kontur aus, d.h. diesen beinhaltend, bis zu dem schaufelblattvorderkantennächsten Schnittpunkt, d.h. auch diesen beinhaltend.

Zusätzlich oder alternativ erstreckt sich der erste Konturabschnitt in einer Ausführung von dem vorderkantenseitigen Anfang der Kontur aus, d.h. diesen beinhaltend, über wenigstens 10%, insbesondere 15%, und höchstens 50% einer Sehnenlänge wenigstens eines Profilschnitts des Schaufelblatts, in einer Ausführung des Profilschnitts, auf dessen maximale Blattdicke für den maximalen Abstand zwischen der Ausgleichsgerade und dem ersten Konturabschnitt Bezug genommen wird.

Zusätzlich oder alternativ erstreckt sich der erste Konturabschnitt in einer Ausführung von dem schaufelblattvorderkantennächsten Schnittpunkt, d.h. diesen beinhaltend, über wenigstens 10%, insbesondere 15%, und höchstens 50% einer Sehnenlänge wenigstens eines Profilschnitts des Schaufelblatts, in einer Ausführung des Profilschnitts, auf dessen maximale Blattdicke für den maximalen Abstand zwischen der Ausgleichsgerade und dem ersten Konturabschnitt Bezug genommen wird. Zusätzlich oder alternativ erstreckt sich der zweite Konturabschnitt in einer Ausführung von dem schaufelblatthinterkantennächsten Schnittpunkt aus, d.h. diesen beinhaltend, bis zu dem hinterkantenseitigen Ende der Kontur, d.h. dieses beinhaltend.

Zusätzlich oder alternativ erstreckt sich der zweite Konturabschnitt in einer Ausführung von dem hinterkantenseitigen Ende der Kontur aus, d.h. dieses beinhaltend, über wenigstens 5% einer Sehnenlänge wenigstens eines Profilschnitts des Schaufelblatts, in einer Ausführung des Profilschnitts, auf dessen maximale Blattdicke für den maximalen Abstand zwischen der Ausgleichsgerade und dem zweiten Konturabschnitt Bezug genommen wird.

Zusätzlich oder alternativ erstreckt sich der zweite Konturabschnitt in einer Ausführung von dem schaufelblatthinterkantennächsten Schnittpunkt aus, d.h. diesen beinhaltend, über wenigstens 5% einer Sehnenlänge wenigstens eines Profilschnitts des Schaufelblatts, in einer Ausführung des Profilschnitts, auf dessen maximale Blattdicke für den maximalen Abstand zwischen der Ausgleichsgerade und dem zweiten Konturabschnitt Bezug genommen wird.

Durch eine solche Ringraumabsenkung bzw. einen solchen Mantelflächeneinzug können in einer Ausführung ein Spannungsverlauf zwischen Schaufelblatt und Mantelfläche besonders vorteilhaft verbessert, vorzugsweise Spannungsspitzen besonders vorteilhaft reduziert, und hierdurch in einer Ausführung eine Zuverlässigkeit besonders vorteilhaft erhöht, vorzugsweise eine Rissinitation besonders vorteilhaft reduziert und/oder ein Rissfortschrittsverhalten besonders vorteilhaft verbessert werden.

In einer Ausführung weist die Schaufelanordnung ein Fillet bzw. einen Übergangs- bzw. Verrundungsradius am mantelflächenseitigen Ende des Schaufelblatts auf dessen Druckseite ("druckseitiges Fillet") und/oder ein Fillet bzw. einen Übergangs- bzw. Verrundungsradius am mantelflächenseitigen Ende des Schaufelblatts auf dessen Saugseite ("saugseitiges Fillet") auf, wobei ein (lokaler) radialer Abstand zwischen einem schaufelblattseitigen Filletauslauf des druckseitigen Fillets und der gekrümmten (ersten bzw. zweiten) Kontur des druckseitigen (ersten bzw. zweiten) Meridianschnitts und/oder ein (lokaler) radialer Abstand zwischen einem schaufelblattseitigen Filletauslauf des saugseitigen Fillets und der gekrümmten (zweiten bzw. ersten) Kontur des saugseitigen (zweiten bzw. ersten) Meridianschnitts (jeweils), insbesondere axial bzw. in Axialrichtung gesehen bzw. mit zunehmender bzw. über die Entfernung von dem vorderkantenseitigen Anfang der Kontur, um höchstens 25% eines Abstands zwischen der (entsprechenden bzw. jeweiligen) Ausgleichsgerade und dem (entsprechenden bzw. jeweiligen) Zwischenpunkt variiert. Mit anderen Worten folgt in einer Ausführung der druck- und/oder saugseitige Filletauslauf der (entsprechenden bzw. jeweiligen) Ringraumabsenkung bzw. dem (entsprechenden bzw. jeweiligen) Mantelfächeneinzug.

Hierdurch können in einer Ausführung ein Spannungsverlauf zwischen Schaufelblatt und Mantelfläche besonders vorteilhaft verbessert, vorzugsweise Spannungsspitzen besonders vorteilhaft reduziert, und hierdurch in einer Ausführung eine Zuverlässigkeit besonders vorteilhaft erhöht, vorzugsweise eine Rissinitation besonders vorteilhaft reduziert und/oder ein Rissfortschrittsverhalten besonders vorteilhaft verbessert werden.

In einer anderen Ausführung weist die Schaufelanordnung ein Fillet bzw. einen Übergangs- bzw. Verrundungsradius am mantelflächenseitigen Ende des Schaufelblatts auf dessen Druckseite ("druckseitiges Fillet") und/oder ein Fillet bzw. einen Übergangs- bzw. Verrundungsradius am mantelflächenseitigen Ende des Schaufelblatts auf dessen Saugseite ("saugseitiges Fillet") auf, wobei ein (lokaler) radialer Abstand zwischen einem schaufelblattseitigen Filletauslauf des druckseitigen Fillets und der (entsprechenden bzw. jeweiligen) Ausgleichsgerade und/oder ein (lokaler) radialer Abstand zwischen einem schaufelblattseitigen Filletauslauf des saugseitigen Fillets und der (entsprechenden bzw. jeweiligen) Ausgleichsgerade (jeweils), insbesondere axial bzw. in Axialrichtung gesehen bzw. mit zunehmender bzw. über die Entfernung von dem vorderkantenseitigen Anfang der Kontur, um höchstens 25% eines Abstands zwischen der (entsprechenden bzw. jeweiligen) Ausgleichsgerade und dem (entsprechenden bzw. jeweiligen) Zwischenpunkt variiert.

Hierdurch kann in einer Ausführung die Fertigung und/oder Aerodynamik verbessert werden.

In einer Ausführung weist die Schaufelanordnung eine Ausgleichsgerade auf, die in axialer Richtung geneigt ist, das heißt, die Steigung der Ausgleichsgeraden ist ungleich null. Je nachdem ob die Schaufelanordnung einer Verdichterstufe oder Turbinenstufe vorgesehen ist, ist die Steigung der Ausgleichsgeraden positiv beziehungsweise negativ.

In einer Ausführung weist die Schaufelanordnung ein Verhältnis der maximalen Abstände der Ausgleichsgeraden zur den beiden Konturabschnitten auf, wonach der maximale Abstand des ersten Konturabschnitts zu der Ausgleichsgeraden geringer ist als der maximale Abstand des zweiten Konturabschnitts zu der Ausgleichsgeraden.

In einer anderen Ausführung weist die Schaufelanordnung ein Verhältnis der maximalen Abstände der Ausgleichsgeraden zur den beiden Konturabschnitten auf, wonach der maximale Abstand des ersten Konturabschnitts zu der Ausgleichsgeraden größer ist als der maximale Abstand des zweiten Konturabschnitts zu der Ausgleichsgeraden.

In einer Ausführung weist die Schaufelanordnung eine Leitschaufel eines Stators und eine dazu benachbarte, insbesondere stromabwärtige oder stromaufwärtige, Laufschaufel eines Rotors auf beziehungsweise umfasst diese, wobei die Leitschaufel und die Laufschaufel jeweils ein wie weiter oben beschriebenes, aber zueinander unterschiedliches Schaufelblatt aufweisen, wobei die Steigung der Ausgleichsgeraden der Leitschaufel größer ist als die Steigung der Ausgleichsgeraden der Laufschaufel. Insbesondere, wenn die stromaufwärtige Lauf- oder Leitschaufel eine geringere Steigung aufweist, als die stromabwärtige andere der Lauf- beziehungsweise Leitschaufel, ist auf besonders einfache Weise ein verlustarmer Übergang entlang der beiden Schaufeln geschaffen, wobei gleichzeitig die weiteren Vorteile der Erfindung wie eine Grundspannungsreduktion im Bauteil und ein verbessertes Rissfortschrittsverhalten erhalten bleiben.

Die Erfindung kann, insbesondere aufgrund der thermischen, aerodynamischen und/oder mechanischen Randbedingungen, mit besonderem Vorteil für Verdichterstufen und/oder Flugtriebwerk-Gasturbine eingesetzt werden, ohne dass die Erfindung hierauf beschränkt ist.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Meridianschnitt eines Teils einer Schaufelanordnung nach einer Ausführung der vorliegenden Erfindung mit einem Schaufelblatt; und
- Fig. 2: einen Profilschnitt des Schaufelblatts.

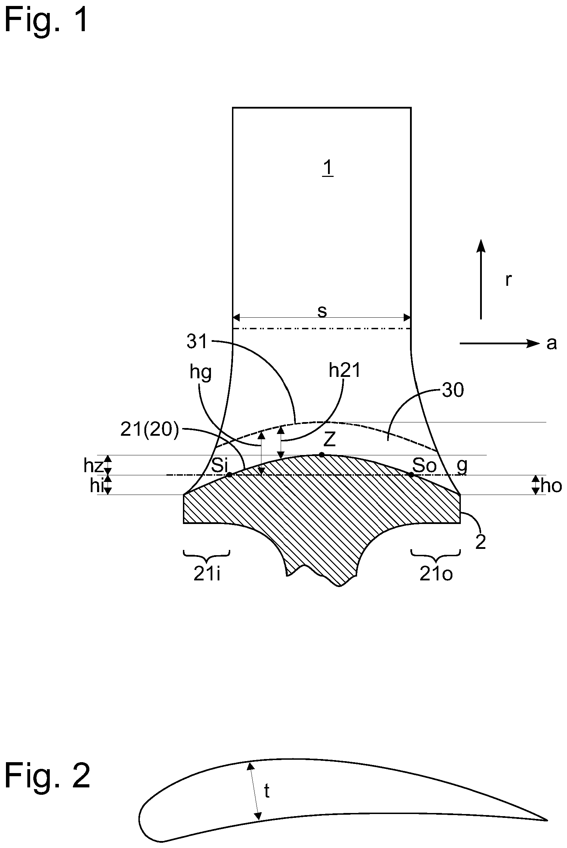

Fig. 1 zeigt einen Meridianschnitt eines Teils einer Schaufelanordnung nach einer Ausführung der vorliegenden Erfindung mit einem Schaufelblatt 1. Fig. 1 kann gleichermaßen eine Druckseite oder Saugseite des Schaufelblatts 1 zeigen, wobei in einer Ausführung ein Meridianschnitt auf der in Umfangsrichtung gegenüberliegenden Seite des Schaufelblatts 1 analog ausgebildet ist bzw. ebenfalls die hier erläuterten Bedingungen erfüllt.

Mit r ist eine Radialrichtung eingezeichnet, mit a eine Axialrichtung.

Fig. 2 zeigt den in Fig. 1 strich-doppelpunktiert angedeuteten Profilschnitt des Schaufelblatts 1 mit (s)einer maximalen Blattdicke t. Die Sehnenlänge s des Profilschnitts ist in Fig. 1 angedeutet.

Im Meridianschnitt der Fig. 1 weist eine radial innere Mantelfläche 20 einer Scheibe bzw. eines Scheibenkörpers 2 der dargestellten Schaufelanordnung eine Kontur 21 auf.

In Fig. 1 sind die Ausgleichsgerade g minimaler quadratischer Abstände zur Kontur 21 (strich-punktiert in Fig. 1), der schaufelblattvorderkantennächste Schnittpunkt Si der Kontur 21 mit dieser Ausgleichsgerade g, der schaufelblatthinterkantennächste Schnittpunkt So der Kontur 21 mit dieser Ausgleichsgerade g sowie der zwischen diesen beiden Schnittpunkten Si, So liegende, schaufelblattseitige (oben in Fig. 1), maximal von dieser Ausgleichsgerade g entfernte Zwischenpunkt Z eingezeichnet. Entsprechend ist die in Fig. 1 linke Schaufelblattkante eine Vorder- und die in Fig. 1 rechte Schaufelblattkante eine Hinterkante des Schaufelblatts 1.

Zudem sind in Fig. 1 ein erster Konturabschnitt 21i, der sich von dem vorderkantenseitigen Anfang der Kontur 21 (links in Fig. 1) aus bis zu dem schaufelblattvorderkantennächsten Schnittpunkt Si erstreckt, und ein zweiter Konturabschnitt 21o eingezeichnet, der sich von dem schaufelblatthinterkantennächsten Schnittpunkt So aus bis zu dem hinterkantenseitigen Ende der Kontur 21 (rechts in Fig. 1) erstreckt.

Der erste Konturabschnitt 21i und der Zwischenpunkt Z sind auf einander radial gegenüberliegenden Seiten (unter- bzw. oberhalb) der Ausgleichsgerade g angeordnet, ebenso der zweite Konturabschnitt 21o und der Zwischenpunkt Z.

Der maximale Abstand hi zwischen der Ausgleichsgerade g und dem ersten Konturabschnitt 21i beträgt wenigstens 45%, insbesondere wenigstens 50%, und höchstens 120% der maximalen Blattdicke t in dem Profilschnitt der Fig. 2 und/oder wenigstens 80%, insbesondere wenigstens 90%, und höchstens 250%des Abstands hz zwischen der Ausgleichsgerade g und dem Zwischenpunkt Z.

Der maximale Abstand ho zwischen der Ausgleichsgerade g und dem zweiten Konturabschnitt 21o beträgt ebenfalls wenigstens 45%, insbesondere wenigstens 50%, und höchstens 150% der maximalen Blattdicke t in dem Profilschnitt der Fig. 2 und/oder wenigstens 160%, insbesondere 175%, und höchstens 270%des Abstands hz zwischen der Ausgleichsgerade g und dem Zwischenpunkt Z.

Dieser Abstand hz zwischen der Ausgleichsgerade g und dem Zwischenpunkt Z beträgt seinerseits wenigstens 20%, insbesondere 25%, und höchsten 100% der maximalen Blattdicke t in dem Profilschnitt der Fig. 2.

In einer Abwandlung sind eine oder zwei der vorgenannten drei Bedingungen nicht erfüllt.

In Fig. 2 ist gestrichelt ein Filletauslauf 31 eines Fillets 30 am mantelflächenseitigen Ende des Schaufelblatts 1 eingezeichnet, der der vorstehend beschriebenen Ringraumabsenkung bzw. dem vorstehend beschriebenen Mantelflächeneinzug im Wesentlichen folgt, so dass ein radialer Abstand h21 zwischen dem Filletauslauf 31 und der gekrümmten Kontur 21 um höchstens 25% des Abstands hz zwischen der Ausgleichsgerade g und dem Zwischenpunkt Z variiert.

In einer Abwandlung folgt der Filletauslauf 31 der Ringraumabsenkung bzw. dem Mantelflächeneinzug hingegen nicht in o.g. Maße. Stattdessen variiert ein radialer Abstand hg zwischen dem Filletauslauf 31 und der Ausgleichsgerade g um höchstens 25% des Abstands hz zwischen der Ausgleichsgerade g und dem Zwischenpunkt Z.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Schaufelblatt
- 2: Scheibe/Scheibenkörper
- 20: Mantelfäche
- 21: Kontur
- 21i: erster Konturabschnitt
- 21o: zweiter Konturabschnitt
- 30: Fillet
- 31: Filletauslauf

- a: Axialrichtung
- g: Ausgleichsgerade
- hi: maximaler radialer Abstand (21i, g)
- ho: maximaler radialer Abstand (21o, g)
- hz: radialer Abstand (g, Z)
- h21: radialer Abstand (21, 31)
- hg: radialer Abstand (g, 31)
- r: Radialrichtung
- s: Sehnenlänge
- Si: schaufelblattvorderkantennächster Schnittpunkt (g, 21)
- So: schaufelblatthinterkantennächster Schnittpunkt (g, 21)
- t: maximale Blattdicke
- Z: Zwischenpunkt

## Patentansprüche

1. Integral beschaufelter Rotor mit einer Schaufelanordnung für eine Gasturbine, insbesondere eine Flugtriebwerk-Gasturbine, wobei die Schaufelanordnung eine radial innere Mantelfläche (20) zur radialen Begrenzung eines Ringraums; und
wenigstens ein damit integral ausgebildetes Schaufelblatt (1) als Laufschaufelblatt aufweist;
wobei eine gekrümmte Kontur (21) der Mantelfläche in wenigstens einem Meridianschnitt
einen schaufelblattvorderkantennäheren, insbesondere schaufelblattvorderkantennächsten, Schnittpunkt (Si) und einen schaufelblatthinterkantennäheren, insbesondere schaufelblatthinterkantennächsten, Schnittpunkt (So) mit einer Ausgleichsgerade (g) minimaler quadratischer Abstände zur Kontur,
wenigstens einen zwischen diesen beiden Schnittpunkten liegenden, schaufelblattseitigen, maximal von dieser Ausgleichsgerade entfernten Zwischenpunkt (Z), sowie
einen ersten Konturabschnitt (21i), der zwischen einem vorderkantenseitigen Anfang dieser Kontur und diesem schaufelblattvorderkantennäheren Schnittpunkt angeordnet ist, und
einen zweiten Konturabschnitt (21o), der zwischen diesem schaufelblatthinterkantennäheren Schnittpunkt und einem hintererkantenseitigen Ende dieser Kontur angeordnet ist, aufweist;
wobei wenigstens eine der Bedingungen erfüllt ist:
(I) der erste Konturabschnitt und der Zwischenpunkt sind auf einander gegenüberliegenden Seiten der Ausgleichsgerade (g) angeordnet und ein maximaler Abstand (hi) zwischen der Ausgleichsgerade und dem ersten Konturabschnitt beträgt wenigstens 45% und höchstens 120% einer maximalen Blattdicke (t) in wenigstens einem Profilschnitt des Schaufelblatts und/oder wenigstens 80% und höchstens 250% eines Abstands (hz) zwischen der Ausgleichsgerade und dem Zwischenpunkt; und/oder
(II) der zweite Konturabschnitt und der Zwischenpunkt sind auf einander gegenüberliegenden Seiten der Ausgleichsgerade (g) angeordnet und ein maximaler Abstand (ho) zwischen der Ausgleichsgerade und dem zweiten Konturabschnitt beträgt wenigstens 45% und höchstens 150% der maximalen Blattdicke (t) in wenigstens einem Profilschnitt des Schaufelblatts und/oder wenigstens 160% und höchstens 270% des Abstands (hz) zwischen der Ausgleichsgerade und dem Zwischenpunkt; und/oder
(III) der erste und/oder zweite Konturabschnitt und der Zwischenpunkt sind auf einander gegenüberliegenden Seiten der Ausgleichsgerade (g) angeordnet und der Abstand (hz) zwischen der Ausgleichsgerade und dem Zwischenpunkt beträgt wenigstens 20% und höchsten 100% der maximalen Blattdicke (t) in wenigstens einem Profilschnitt des Schaufelblatts.

2. Integral beschaufelter Rotor nach Anspruch 1, **dadurch gekennzeichnet, dass** der erste Konturabschnitt (21i) sich von dem vorderkantenseitigen Anfang der Kontur aus bis zu dem schaufelblattvorderkantennächsten Schnittpunkt (Si) und/oder von dem vorderkantenseitigen Anfang der Kontur und/oder dem schaufelblattvorderkantennächsten Schnittpunkt (Si) aus über wenigstens 10%, insbesondere 15%, und höchstens 50% einer Sehnenlänge (s) wenigstens eines Profilschnitts des Schaufelblatts und/oder der zweite Konturabschnitt sich von dem schaufelblatthinterkantennächsten Schnittpunkt aus bis zu dem hinterkantenseitigen Ende der Kontur und/oder von dem hinterkantenseitigen Ende der Kontur und/oder dem schaufelblatthinterkantennächsten Schnittpunkt aus über wenigstens 5%, insbesondere 10%, und höchstens 50% einer Sehnenlänge (s) wenigstens eines Profilschnitts des Schaufelblatts erstreckt.

3. Integral beschaufelter Rotor nach einem der vorhergehenden Ansprüche, **gekennzeichnet durch** ein Fillet (30) am mantelflächenseitigen Ende des Schaufelblatts, wobei ein radialer Abstand (h21; hg) zwischen einem schaufelblattseitigen Filletauslauf (31) und der gekrümmten Kontur oder der Ausgleichsgerade um höchstens 25% eines bzw. des Abstands (hz) zwischen der Ausgleichsgerade und dem Zwischenpunkt variiert.

4. Integral beschaufelter Rotor nach einem der vorhergehenden Ansprüche, **dadurch gekennzeichnet, dass** die Ausgleichsgerade in axialer Richtung geneigt ist, insbesondere also die Steigung der Ausgleichsgeraden ungleich null ist.

5. Integral beschaufelter Rotor nach Anspruch 4, **dadurch gekennzeichnet, dass** der maximale Abstand des ersten Konturabschnitts (hi) zu der Ausgleichsgeraden (g) geringer ist als der maximale Abstand des zweiten Konturabschnitts (ho) zu der Ausgleichsgeraden (g).

6. Integral beschaufelter Rotor nach Anspruch 4, **dadurch gekennzeichnet, dass** der maximale Abstand des ersten Konturabschnitts (hi) zu der Ausgleichsgeraden (g) größer ist als der maximale Abstand des zweiten Konturabschnitts (ho) zu der Ausgleichsgeraden (g).

7. Integral beschaufelter Rotor nach einem der Ansprüche 1 bis 6, wobei die Schaufelanordnung eine Leitschaufel eines Stators und eine dazu benachbarte, insbesondere stromabwärtige, Laufschaufel eines Rotors umfasst, wobei die Leitschaufel und die Laufschaufel jeweils ein Schaufelblatt nach einem der Ansprüche 1 bis 6 aufweisen, **dadurch gekennzeichnet, dass** die Steigung der Ausgleichsgeraden der Leitschaufel größer ist als die Steigung der Ausgleichsgeraden der Laufschaufel.

8. Gasturbine, insbesondere Flugtriebwerk-Gasturbine, mit wenigstens einer Verdichterstufe und/oder wenigstens einer Turbinenstufe mit einem integral beschaufelten Rotor nach einem der vorhergehenden Ansprüche.

## Claims

1. Integrally bladed rotor with a blade arrangement for a gas turbine, in particular an aircraft engine gas turbine, wherein the blade arrangement has a radially inner outer surface (20) for radially delimiting an annular space; and
at least one integrally formed airfoil (1) as a rotor airfoil;
wherein a curved contour (21) of the outer surface in at least one meridian section has
an intersection point (Si) closer to, in particular closest to, the airfoil leading edge and an intersection point (So) closer to, in particular closest to, the airfoil trailing edge with a regression line (g) of minimum squared distances to the contour,
at least one intermediate point (Z) located between these two intersection points, on the airfoil side, and farthest from this regression line, as well as
a first contour section (21i) which is arranged between a leading-edge-side beginning of this contour and this intersection point closer to the airfoil leading edge, and
a second contour section (21o) which is arranged between this intersection point closer to the airfoil trailing edge and a trailing-edge-side end of this contour;
wherein at least one of the conditions is met:
(I) the first contour section and the intermediate point are arranged on opposite sides of the regression line (g), and a maximum distance (hi) between the regression line and the first contour section is at least 45% and at most 120% of a maximum blade thickness (t) in at least one profile section of the airfoil and/or at least 80% and at most 250% of a distance (hz) between the regression line and the intermediate point; and/or
(II) the second contour section and the intermediate point are arranged on opposite sides of the regression line (g), and a maximum distance (ho) between the regression line and the second contour section is at least 45% and at most 150% of the maximum blade thickness (t) in at least one profile section of the airfoil and/or at least 160% and at most 270% of the distance (hz) between the regression line and the intermediate point; and/or
(III) the first and/or second contour section and the intermediate point are arranged on opposite sides of the regression line (g) and the distance (hz) between the regression line and the intermediate point is at least 20% and at most 100% of the maximum blade thickness (t) in at least one profile section of the airfoil.

2. Integrally bladed rotor according to claim 1, **characterized in that** the first contour section (21i) extends from the leading-edge-side beginning of the contour to the intersection point (Si) closest to the airfoil leading edge and/or from the leading-edge-side beginning of the contour and/or the intersection point (Si) closest to the airfoil leading edge over at least 10%, in particular 15%, and at most 50% of a chord length (s) of at least one profile section of the airfoil and/or the second contour section extends from the intersection point closest to the airfoil trailing edge to the trailing-edge-side end of the contour and/or from the trailing-edge-side end of the contour and/or the intersection point closest to the airfoil trailing edge over at least 5%, in particular 10%, and at most 50% of a chord length (s) of at least one profile section of the airfoil.

3. Integrally bladed rotor according to either of the preceding claims, **characterized by** a fillet (30) at the outer-surface-side end of the airfoil, a radial distance (h21; hg) between an airfoil-side fillet runout (31) and the curved contour or the regression line varying by at most 25% of a or the distance (hz) between the regression line and the intermediate point.

4. Integrally bladed rotor according to any of the preceding claims, **characterized in that** the regression line is inclined in the axial direction, in particular the slope of the regression line is not equal to zero.

5. Integrally bladed rotor according to claim 4, **characterized in that** the maximum distance of the first contour section (hi) to the regression line (g) is less than the maximum distance of the second contour section (ho) to the regression line (g).

6. Integrally bladed rotor according to claim 4, **characterized in that** the maximum distance of the first contour section (hi) to the regression line (g) is greater than the maximum distance of the second contour section (ho) to the regression line (g).

7. Integrally bladed rotor according to any of claims 1 to 6, the blade arrangement comprising a guide vane of a stator and an adjacent, in particular downstream, rotor blade, the guide vane and the rotor blade each having an airfoil according to any of claims 1 to 6, **characterized in that** the slope of the guide vane's regression line is greater than the slope of the rotor blade's regression line.

8. Gas turbine, in particular aircraft engine gas turbine, with at least one compressor stage and/or at least one turbine stage with an integrally bladed rotor according to any of the preceding claims.

## Revendications

1. Rotor à aubage intégral comportant un agencement d'aubes pour une turbine à gaz, en particulier une turbine à gaz de moteur d'aéronef, dans lequel l'agencement d'aubes présente une surface d'enveloppe (20) radialement intérieure pour délimiter radialement un espace annulaire ; et
au moins une pale d'aube (1) réalisée d'un seul tenant avec celle-ci en tant que pale d'aube mobile ;
dans lequel un contour incurvé (21) de la surface d'enveloppe dans au moins une coupe méridienne présente
un point d'intersection (Si) proche du bord d'attaque de pale d'aube, en particulier le plus proche du bord d'attaque de pale d'aube, et un point d'intersection (So) proche du bord de fuite de pale d'aube, en particulier le plus proche du bord de fuite de pale d'aube, avec une droite d'ajustement (g) de distances quadratiques minimales par rapport au contour,
au moins un point intermédiaire (Z) situé entre lesdits deux points d'intersection, côté pale d'aube et éloigné au maximum de ladite droite d'ajustement, ainsi que
une première section de contour (21i) disposée entre un début côté bord d'attaque dudit contour et ledit point d'intersection proche du bord d'attaque de pale d'aube, et
une seconde section de contour (21o) disposée entre ledit point d'intersection proche du bord de fuite de pale d'aube et une extrémité côté bord de fuite dudit contour ;
dans lequel au moins l'une des conditions est satisfaite :
(I) la première section de contour et le point intermédiaire sont disposés sur des côtés opposés de la droite d'ajustement (g) et une distance maximale (hi) entre la droite d'ajustement et la première section de contour est d'au moins 45 % et d'au plus 120 % d'une épaisseur de pale maximale (t) dans au moins une section de profil de la pale d'aube et/ou d'au moins 80 % et d'au plus 250 % d'une distance (hz) entre la droite d'ajustement et le point intermédiaire ; et/ou
(II) la seconde section de contour et le point intermédiaire sont disposés sur des côtés opposés de la droite d'ajustement (g) et une distance maximale (ho) entre la droite d'ajustement et la seconde section de contour est d'au moins 45 % et d'au plus 150 % de l'épaisseur de pale maximale (t) dans au moins une section de profil de la pale d'aube et/ou d'au moins 160 % et d'au plus 270 % de la distance (hz) entre la droite d'ajustement et le point intermédiaire ; et/ou
(III) la première et/ou la seconde section de contour et le point intermédiaire sont disposés sur des côtés opposés de la droite d'ajustement (g) et la distance (hz) entre la droite d'ajustement et le point intermédiaire est d'au moins 20 % et au plus 100 % de l'épaisseur de pale maximale (t) dans au moins une section de profil de la pale d'aube.

2. Rotor à aubage intégral selon la revendication 1, **caractérisé en ce que** la première section de contour (21i) s'étend depuis le début du contour côté bord d'attaque jusqu'au point d'intersection (Si) le plus proche du bord d'attaque de pale d'aube et/ou depuis le début du contour côté bord d'attaque et/ou le point d'intersection (Si) le plus proche du bord d'attaque de pale d'aube sur au moins 10 %, en particulier 15 %, et au maximum 50 % d'une longueur de corde (s) d'au moins une section de profil de la pale d'aube et/ou la seconde section de contour s'étend depuis le point d'intersection le plus proche du bord de fuite de pale d'aube jusqu'à l'extrémité du contour côté bord de fuite et/ou depuis l'extrémité du contour côté bord de fuite et/ou le point d'intersection le plus proche du bord de fuite de pale d'aube sur au moins 5 %, en particulier 10 %, et au maximum 50 % d'une longueur de corde (s) d'au moins une section de profil de la pale d'aube.

3. Rotor à aubage intégral selon l'une des revendications précédentes, **caractérisé par** un congé (30) au niveau de l'extrémité côté surface d'enveloppe de la pale d'aube, dans lequel une distance radiale (h21 ; hg) entre une allure de congé (31) côté pale d'aube et le contour incurvé ou la droite d'ajustement varie d'au plus 25 % d'une ou de la distance (hz) entre la droite d'ajustement et le point intermédiaire.

4. Rotor à aubage intégral selon l'une des revendications précédentes, **caractérisé en ce que** la droite d'ajustement est inclinée dans la direction axiale, donc en particulier la pente de la droite d'ajustement est non nulle.

5. Rotor à aubage intégral selon la revendication 4, **caractérisé en ce que** la distance maximale entre la première section de contour (hi) et la droite d'ajustement (g) est inférieure à la distance maximale entre la seconde section de contour (ho) et la droite d'ajustement (g).

6. Rotor à aubage intégral selon la revendication 4, **caractérisé en ce que** la distance maximale entre la première section de contour (hi) et la droite d'ajustement (g) est supérieure à la distance maximale entre la seconde section de contour (ho) et la droite d'ajustement (g).

7. Rotor à aubage intégral selon l'une des revendications 1 à 6, dans lequel l'agencement d'aubes comprend une aube directrice d'un stator et une aube mobile d'un rotor voisine de celle-ci, en particulier en aval, dans lequel l'aube directrice et l'aube mobile présentent respectivement une pale d'aube selon l'une des revendications 1 à 6, **caractérisé en ce que** la pente de la droite d'ajustement de l'aube directrice est supérieure à la pente de la droite d'ajustement de l'aube mobile.

8. Turbine à gaz, en particulier turbine à gaz de moteur d'aéronef, comportant au moins un étage de compresseur et/ou au moins un étage de turbine comportant un rotor à aubage intégral selon l'une des revendications précédentes.
